(19) Europäisches Patentamt
European Patent Office
Office européen des brevets

(11) **EP 1 464 193 B1**

(12) **EUROPEAN PATENT SPECIFICATION**

(45) Date of publication and mention
of the grant of the patent:
**19.08.2009 Bulletin 2009/34**

(51) Int Cl.:
***H04W 64/00*** *(2009.01)*

(21) Application number: **02792151.9**

(22) Date of filing: **16.12.2002**

(86) International application number:
**PCT/SE2002/002334**

(87) International publication number:
**WO 2003/056857 (10.07.2003 Gazette 2003/28)**

(54) **PROCEDURE AND ARRANGEMENT FOR PLACING DISTANCES IN ORDER OF PRECEDENCE**

PROZEDUR UND ANORDNUNG ZUM ANORDNEN VON DISTANZEN IN DER RANGREIHENFOLGE

PROCEDE ET DISPOSITIF SERVANT A CLASSER DES DISTANCES PAR ORDRE DE PRIORITE

(84) Designated Contracting States:
**AT BE BG CH CY CZ DE DK EE ES FI FR GB GR IE IT LI LU MC NL PT SE SI SK TR**
Designated Extension States:
**LT LV**

(30) Priority: **21.12.2001 SE 0104368**

(43) Date of publication of application:
**06.10.2004 Bulletin 2004/41**

(73) Proprietor: **TELIASONERA AB**
**106 63 Stockholm (SE)**

(72) Inventor: **STENFELT, John**
**S-114 20 Stockholm (SE)**

(74) Representative: **Hopfgarten, Nils et al**
**Groth & Co.KB**
**P.O. Box 6107**
**102 32 Stockholm (SE)**

(56) References cited:
**WO-A1-00/19743      WO-A1-01/43482**
**WO-A1-98/57506      US-A- 6 108 557**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a procedure and an arrangement to place distances, between a user located in an area and given points, in order of precedence. More exactly the invention relates to a procedure which can be used in a telecommunication system to, from a choice of given points, select one which probably is nearest a user who with a mobile is within in an area. By dividing the area in smaller parts or positions, the invention can place the given points in order of precedence so that the one which most probably is nearest the user's position can be selected.

PRIOR ART

It is previously known to locate mobiles in telecommunication systems. Service providers by that can base services on the location/position of the mobile. In the previous technology the position of the mobile is considered to be determined as a latitude or longitude, that is, a point, or to a cell or a part of a cell. The proximity to given points then has been determined by starting from the determined point or the center of the are where the mobile is located. As examples of previously known technology we refer to WO 01/43482, WO 00/19743, WO 01/26393, US 5,561,704, EP 1 133 119, WO 98/57506.

Because the position of the mobile actually can be anywhere within an extensive area, this method often provides wrong results.

SUMMARY OF THE INVENTION

The invention provides a procedure for placing distances, between a user located in an area (K) and given points (P), in order of precedence.

The invention also relates to corresponding arrangement, computer program and medium with one on that stored computer program.

The invention is defined in the independent patent claims 1 and 8, whereas embodiments are given in the sub claims.

The invention consequently solves the problem by taking into consideration the extent of the whole area. The advantage is that the user more frequently obtains a correct information about which point that is nearest than if a conventional method should be used.

BRIEF DESCRIPTION OF THE DRAWINGS

The invention will be described more in detail in the following, while referring to enclosed drawings, in which

Figure 1A and 1B show a circular cell and a sector-shaped cell, and
Figure 2A and 2B show respective parts of a circular cell and a sector-shaped cell.

DESCRIPTION OF PREFERRED EMBODIMENTS

Generally the invention relates to procedure for placing distances in order of precedence between a user located in an area and given points. The invention can with advantage be used in systems which provide position based services for mobile terminals. There today exist systems and procedures to locate users in mobile telecommunication systems. The location as such does not constitute any part of the present invention. The given points can represents stores/shops, gas stations, drugstores and similar places which the user wants to visit to get a service or buy an article etc. It is assumed that the position of the given points are entered into a database in the telecommunication system. These positions are as a rule fixed and there are no problems to indicate/find their locations.

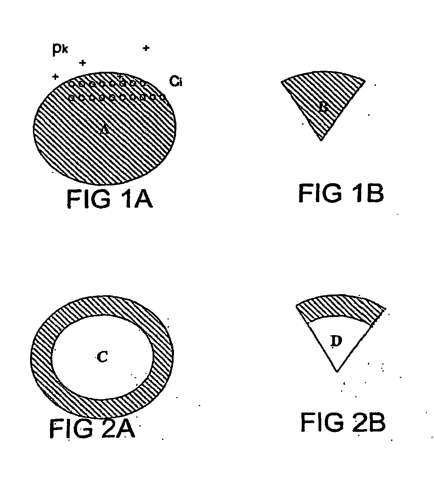

Position based services for mobile terminals are today chiefly based on GSM (in Europe) and corresponding mobile communication systems. Unfortunately the accuracy of positioning by means of this type of network is rather limited. Especially two technologies are today used to position GSM-telephones: Cell ID and Timing Advance (TA). For Cell ID applies that the user's position can be calculated to the cell in which the user at the time is (= cell identity), with an accuracy corresponding to the size of the cell. Figure 1 shows ordinary cells, a circular cell (A) and a sector-shaped cell (B).

For TA the user's position in similar way can be determined with an accuracy corresponding to the TA-value which the user at the time has in the cell. TA gives a measure of the distance between the user and the antenna of the base station, but not the direction. This divides the cell into smaller parts which are located in corresponding distance intervals. Figure 2 shows example of a part of a circular cell (C) and a part of a sector-shaped cell (D).

The positioning/position finding provides no further information about where in the determined area the user is.

Based on other information, for instance statistics regarding users pattern of movements and radio wave propagation in the area, however, it will be possible to allocate various probabilities for that the user is in/at different places in the area. This provides a distribution of positions which is utilized in one embodiment of the invention.

It is easy to imagine many different services, the aim of which is to decide which of several different objects located/placed in points $(p_1, p_2, ,,, p_N)$ which is nearest the user. See Figure 1. The objects most frequently are outside the cell, but may also be at the edge or even within it. For instance it is possible to imagine a service which informs/tells about which subway station or gas station that is nearest the user. Intuitively one might imagine that this could be decided by quite simply calculate the distance from the cell to the different objects. The object which has the shortest distance to the cell should be the one that is located nearest. Paradoxically enough it may be that the object which, from a distance point of view (according to some method for judgement of distance) is nearest the area where the user is, is not the one which in the majority of cases is the nearest.

EXAMPLE:

Assume that we want to determine which of the points $p_1$ and $p_2$ that is nearest an area (for instance corresponding to the area in which a positioned GSM-customer is). The area is divided into 5 sections (for the sake of simplicity). The distance to $p_1$ and $p_2$ for the different sections is given by the table below:

| Section: | 1 | 2 | 3 | 4 | 5 |
|---|---|---|---|---|---|
| Distance to p1: | 15 | 15 | 4 | 4 | 4 |
| Distance to p2: | 14 | 14 | 14 | 3 | 3 |

If there is equal probability that the customer is in any of the 5 sectors , the average distance from the area to $p_1$ is equal to (15+15+4+4+4+)/5 = 8,4, and to $p_2$ equal to (14+14+14+3+3)/5 = 9,6.

In spite of that the average distance to $p_2$ is greater than the distance to $p_1$, the distance to $p_2$ is in 4 out of 5 sectors smaller than to $p_1$!

Consequently there is 80% probability that $p_1$ is nearest the customer.

One embodiment of the invention shows a procedure to decide which object, out of several possible, which with greatest probability is nearest a mobile user, where the user's position is determined with the exception of one area, for instance of type A, B, C or D (see Figure 1 and Figure 2). The basic idea is that the area where the user can be within is divided into a number of positions or smaller sub areas. Then the distances to the different objects for each sub area are calculated with the aim to decide which object that is nearest in respective sub area. After summing up of the result, a placing in precedence of the different objects can be made from a distance point of view. This summing up can, if wanted, also be weighted according to any applicable distribution of positions.

Mathematically expressed, one embodiment of the invention can be described according to the following.

One wants to decide which of a number of given points $p_1$ in an amount P(i=1..N) which is nearest a user.

Let K be the area in which the user has been positioned. K can have just any form. Further let the amount

$C = \{c_1, c_2, ...., c_{Tm}\}$

constitute a discrete representation of K, consisting of $Tm$ distributed points or positions in K. The points are preferably uniformly distributed. Some positions are illustrated in Figure 1A.

After that, calculate

$r_i = \{ |c_i - p_1| , | c_i - p_2| , ,...., |c_i - p_N| \}$ for $i = 1 .. $ N, that is, the distances between all the positions in C and the given points in P. Assume that the user's probable position in $C$ is described by the distribution of postions $X = \{x_1, x_2, ...., x_{Tm}\}$, where x is the probability that the user is at/in a position in C. (For instance do indoor environments, urban areas and rural areas usually generate different distributions due to that the radio waves are reflected against different objects). Then the percentage distribution over how often the respective objects $(p_1, p_2, .... ,p_N)$ is the nearest is given by:

$$d_k = \sum_{i=1}^{Tm} x_i * \delta\left(\left|c_i - p_k\right| - \min(r_i)\right)$$

$$\delta(t) = \begin{cases} 0 & t < 0 \\ 1 & t = 0 \\ 0 & t > 0 \end{cases}$$

for $k = 1...N$. The term which is summed up can be interpreted as the probability that the user is at position $c_i$ at the same time as $c_i$ is nearest $p_k$. For the function $\delta(t)$ is 1 only when $t=0$, and $t=0$ only when $c_i$ is nearest position to $p_k$. $d_k$ consequently is the probability that $p_k$ is the object which is nearest the user. If $max(d_1, d_2, ... , d_N)= d_k$ then $p_k$ consequently is the object which with greatest probability is nearest the user.

In order to simplify the calculation, a uniform distribution of positions can be assumed (all $x_i$ are equal). This results in that:

$$d_k = \frac{1}{T_m} \sum_{i=1}^{T_m} \delta(|c_i - p_k| - \min(r_i))$$

In other words, the probability ($d_k$) that a given point ($p_k$) is nearest the user is calculated as a sum of the number of positions ($c_i$) which is nearest the given point ($p_k$) divided by the total number of positions ($c_i$), summed up over all positions ($c_i$).

To implement the invention, for instance in a telecommunication system, a database is needed arranged to store a representation (C) of the area (K) and a distribution of positions (X) for the user, connected/associated to the representation (C) of the area. Moreover a calculation device is needed to calculate the probabilities ($d_k$) that given points ($p_k$) are nearest the user and to place the given points ($p_k$) in order of precedence according to the calculated probabilities ($d_k$).

The calculation device is suitably a computer programmed with an algorithm which can execute the above mentioned operations and calculations. The database can be internal or external. If a suitable computer is included in an existing telecommunication system, the computer program can be installed from a medium such as CD-ROM and diskette.

One advantage with the invention is that it takes into consideration the order of precedence, from a distant point of view, in each separate point in the positioned area in which the user is. It is primarily this non-linearity that distinguishes the invention from existing methods. If the method, for instance, should be used in a service to inform/tell about which subway station or gas station that is the nearest, then it would result in that the user should have correct information more frequently than if a conventional method should be used.

The invention can be used in all types of cellular networks, for instance in GSM-networks, which make use of similar positioning technologies. The scope of protection of the invention is only limited by the patent claims below.

**Claims**

1. Procedure for placing distances in an order of precedence between a mobile communications user located in an area (K) and given points (P), **characterized in** the steps:

   to create a representation (C) of the area (K) by a number of distributed discrete positions ($c_i$) and to calculate the distances ($r_i$) between the discrete positions ($c_i$) and the given points ($p_k$);
   to determine that the user is located within said area (k);
   to create a distribution of positions (X) for the user, connected to the representation (C) of the area; and to calculate the probability ($d_k$) that a given point ($p_k$) is nearest the user as a sum of the probability that a user is at a position ($c_i$) at the same time as the given point ($P_k$) is nearest the position ($c_i$), summed up over all positions ($c_i$), in order to place the given points ($p_k$) in order of precedence
   according to the calculated probabilities ($d_k$).

2. Procedure as claimed in claim 1,
   **characterized in that** the discrete positions ($c_i$) are uniformly distributed in the area (K).

**3.** Procedure as claimed in claim 1 or 2,
**characterized in that** the probability ($d_k$) that a given point ($p_k$) is nearest the user is calculate as

$$d_k = \sum_{i=1}^{T_m} x_i * \delta\left(|c_i - p_k| - \min(r_i)\right)$$

$$\delta(t) = \begin{cases} 0; & t < 0 \\ 1; & t = 0 \\ 0; & t > 0 \end{cases}$$

where $x_i$ is the probability that the user is at a position in the representation [C],
and $T_m$ is the number of positions in the representation (C).

**4.** Procedure as claimed in claim 1 or 2,
**characterized in that** the user has a uniform distribution of position/positions (X) for the whole representation (C) of the area (K).

**5.** Procedure as claimed in claim 4,
**characterized in that** the probability ($d_k$) that a given point ($p_k$) is nearest the user is calculated as a sum of the number of positions ($c_i$) which are nearest the given point ($p_k$) divided by the total number of positions ($c_i$), summed up over all positions ($c_i$).

**6.** Procedure as claimed in patent claim 4,
**characterized in that** the probability ($d_k$) that a given point ($p_k$) is nearest the user is calculated as

$$d_k = \frac{1}{Tm} \sum_{i=1}^{Tm} \delta\left(|c_i - p_k| - \min(r_i)\right)$$

$$\delta(t) = \begin{cases} 0; & t < 0 \\ 1; & t = 0 \\ 0; & t > 0 \end{cases}$$

where $T_m$ is the number of positions in the representation (C).

**7.** Procedure as claimed in any of the previous claims, **characterized in that** the area (K) has the form of either a circular cell, a sector-shaped cell, a part of a circular cell, or a part of a sector-shaped cell.

**8.** Arrangement for placing distances in an order of precedence, between a mobile communications user located in an area (K) and given points (P),
**characterized in**; means for determining that the user is located within said area (K); a database arranged to store a representation (C) of the area (K), **in that** the database is arranged to represent the area (K) with a number of distributed discrete positions ($c_i$), **in that** a calculation device is arranged to calculate the distances ($r_i$) between the discrete positions ($c_i$) and the given points ($p_k$), and **in that** the calculation device is arranged to calculate the probability ($d_k$) that a given point ($p_k$) is nearest the user as a sum of the probability that a user is at a position ($c_i$) at the same time as the given point ($p_k$) is nearest the position ($c_i$), summed up over all positions ($c_i$) to place the given points ($p_k$) in order of precedence according to the calculated probabilities ($d_k$).

**9.** Arrangement as claimed in claim 8,
**characterized in that** the discrete positions ($c_i$) are uniformly distributed in the area (K).

**10.** Arrangement as claimed in claim 8 or 9,
**characterized in that** the calculation device is arranged to calculate the probability ($d_k$) that a given point ($p_k$) is nearest the user as

$$d_k = \sum_{i=1}^{T_m} x_i \cdot \delta\big(|c_i - p_k| - \min(r_i)\big)$$

$$\delta(t) = \begin{cases} 0 & t < 0 \\ 1 & t = 0 \\ 0 & t > 0 \end{cases}$$

where $x_i$ is the probability that the user is in a position in the representation (C), and
$T_m$ is the number of positions in the representation (C).

**11.** Arrangement as claimed in claim 8 or 9,
**characterized in that** the distribution of positions (X) for the user is uniform for the whole representation (C) of the area (K).

**12.** Arrangement as claimed in claim 11,
**characterized in that** the calculation device is arranged to calculate the probability ($d_k$) that a given point ($p_k$) is nearest the user as a sum of the number of positions ($c_i$) which are nearest the given point ($p_k$) divided by the total number of positions ($c_i$), summed up over all positions ($c_i$).

**13.** Arrangement as claimed in patent claim 11,
**characterized in that** the calculation device is arranged to calculate the probability ($d_k$) that at given point ($p_k$) is nearest the user as

$$d_k = \frac{1}{Tm} \sum_{i=1}^{T_m} \delta\big(|c_i - p_k| - \min(r_i)\big)$$

$$\delta(t) = \begin{cases} 0; & t < 0 \\ 1; & t = 0 \\ 0; & t > 0 \end{cases}$$

where $T_m$ is the number of positions in the representation (C).

**14.** Arrangement as claimed in any of the claims 8 to 13, **characterized in that** the area (K) has the form of either a circular cell, a sector-shaped cell, a part of a circular cell, or a part of a sector-shaped cell.

**15.** Computer program in an arrangement for placing distances in an order of precedence, between a user located to an area (K) and given points (P),
**characterized in that** it is arranged to execute the steps according to any of the claims 1 to 7.

**16.** Medium for computer program, **characterized in that** it is arranged to stores a computer program according to claim 15.

**Patentansprüche**

1. Verfahren zum Anordnen von Entfernungen in einer Prioritätsreihenfolge zwischen einem Benutzer mobiler Kommunkation, der in einem Gebiet (K) angeordnet ist, und vorgegebenen Punkten (P), **gekennzeichnet durch** die Schritte: eine Darstellung (C) des Gebiets (K) **durch** eine Anzahl von verteilten diskreten Positionen ($c_i$) zu schaffen und die Entfernungen ($r_i$) zwischen den diskreten Positionen ($c_i$) und den vorgegebenen Punkten ($p_k$) zu berechnen; zu bestimmen, dass der Benutzer sich innerhalb dieses Gebiets (K) befindet; eine Verteilung von Positionen (X) für den Benutzer, verbunden mit der Darstellung (C) des Gebiets zu schaffen; und die Wahrscheinlichkeit ($d_k$), dass ein gegebener Punkt ($p_k$) dem Benutzer am nächsten ist, als eine Summe der Wahrscheinlichkeit zu berechnen, dass sich ein Benutzer an der Position ($c_i$) zur selben Zeit befindet, zu der der gegebene Punkt ($p_k$) der Position ($c_i$) am nächsten ist, summiert über alle Positionen ($c_i$), um die gegebenen Punkte ($p_k$) in Prioritätsreihenfolge gemäß den berechneten Wahrscheinlichkeiten ($d_k$) anzuordnen.

2. Verfahren nach Anspruch 1, **dadurch gekennzeichnet, dass** die diskreten Positionen ($c_i$) im Gebiet (K) gleichförmig verteilt sind.

3. Verfahren nach Anspruch 1 oder 2, **dadurch gekennzeichnet, dass** die Wahrscheinlichkeit ($d_k$), dass ein gegebener Punkt ($p_k$) dem Benutzer am nächsten ist, berechnet wird als

$$d_k = \sum_{i=1}^{T_m} x_i * \delta\left(\left|c_i - p_k\right| - \min(r_i)\right)$$

$$\delta(t) = \begin{cases} 0; & t < 0 \\ 1; & t = 0 \\ 0; & t > 0 \end{cases}$$

wobei $x_i$ die Wahrscheinlichkeit ist, dass sich der Benutzer an einer Position in der Darstellung (C) befindet, und $T_m$ die Anzahl von Positionen in der Darstellung (C) ist.

4. Verfahren nach Anspruch 1 oder 2, **dadurch gekennzeichnet, dass** der Benutzer eine gleichförmige Verteilung von Position/Positionen (X) für die gesamte Darstellung (C) des Gebiets (K) hat.

5. Verfahren nach Anspruch 4, **dadurch gekennzeichnet, dass** die Wahrscheinlichkeit, ($d_k$), dass ein gegebener Punkt ($p_k$) dem Benutzer am nächsten ist, als eine Summe der Anzahl von Positionen ($c_i$), die dem gegebenen Punkt ($p_k$) am nächsten sind, dividiert durch die Anzahl von Positionen ($c_i$), summiert über alle Positionen ($c_i$) berechnet wird.

6. Verfahren nach Anspruch 4, **dadurch gekennzeichnet, dass** die Wahrscheinlichkeit ($d_k$), dass ein gegebener Punkt ($p_k$) dem Benutzer am nächsten ist, berechnet wird als

$$d_k = \frac{1}{Tm} \sum_{i=1}^{Tm} \delta\left(\left|c_i - p_k\right| - \min(r_i)\right)$$

$$\delta(t) = \begin{cases} 0; & t < 0 \\ 1; & t = 0 \\ 0; & t > 0 \end{cases}$$

wobei $T_m$ die Anzahl von Positionen in der Darstellung (C) ist.

7. Verfahren nach einem der vorangehenden Ansprüche, **dadurch gekennzeichnet, dass** das Gebiet (K) die Form entweder einer kreisförmigen Zelle, einer sektorförmigen Zelle, eines Teils einer kreisförmigen Zelle oder eines Teils einer sektorförmigen Zelle hat.

8. Anordnung zum Anordnen von Entfernungen in einer Prioritätsreihenfolge zwischen einem Benutzer mobiler Kommunikation, der in einem Gebiet (K) und vorgegebenen Punkten (P) angeordnet ist, **gekennzeichnet durch**:

Mittel zum Bestimmen, dass der Benutzer sich innerhalb dieses Gebiets (K) befindet;
eine Datenbank, die dazu ausgebildet ist, eine Darstellung (C) des Gebietes (K) zu speichern, dass die Datenbank dazu ausgebildet ist, das Gebiet (K) mit einer Anzahl von verteilten diskreten Positionen ($c_i$) darzustellen,
dass eine Berechnungseinrichtung angeordnet ist, die Entfernungen ($r_i$) zwischen den diskreten Positionen ($c_i$) und den gegebenen Punkten ($p_k$) zu berechnen; und
dass die Berechnungseinrichtung dazu ausgebildet ist, die Wahrscheinlichkeit ($d_k$), dass ein gegebener Punkt ($p_k$) dem Benutzer am nächsten ist, als eine Summe der Wahrscheinlichkeit zu berechnen, dass ein Benutzer sich an einer Position ($c_i$) zur selben Zeit befindet, zu der der gegebene Punkt ($p_k$) der Position ($c_i$) am nächsten ist, summiert über alle Positionen ($c_i$), um die gegebenen Punkte ($p_k$) in Prioritätsreihenfolge gemäß den berechneten Wahrscheinlichkeiten ($d_k$) anzuordnen.

9. Anordnung nach Anspruch 8, **dadurch gekennzeichnet, dass** die diskreten Positionen ($c_i$) im Gebiet (K) gleichförmig verteilt sind.

10. Anordnung nach Anspruch 8 oder 9, **dadurch gekennzeichnet, dass** die Berechnungseinrichtung dazu ausgebildet ist, die Wahrscheinlichkeit ($d_k$), dass ein gegebener Punkt ($p_k$) dem Benutzer am nächsten ist, zu berechnen als

$$d_k = \sum_{i=1}^{T_m} x_i * \delta\left(|c_i - p_k| - \min(r_i)\right)$$

$$\delta(t) = \begin{cases} 0 & t < 0 \\ 1 & t = 0 \\ 0 & t > 0 \end{cases}$$

wobei $x_i$ die Wahrscheinlichkeit ist, dass sich der Benutzer in einer Position in der Darstellung (C) befindet und $T_m$ die Anzahl von Positionen in der Darstellung (C) ist.

11. Anordnung nach Anspruch 8 oder 9, **dadurch gekennzeichnet, dass** die Verteilung von Positionen (X) für den Benutzer für die gesamte Darstellung (C) des Gebiets (K) gleichförmig ist.

12. Anordnung nach Anspruch 11, **dadurch gekennzeichnet, dass** die Berechnungseinrichtung dazu ausgebildet ist, die Wahrscheinlichkeit ($d_k$), dass ein gegebener Punkt ($p_k$) dem Benutzer am nächsten ist, als Summe der Anzahl von Positionen ($c_i$) zu berechnen, die dem gegebenen Punkt ($p_k$) am nächsten sind, geteilt durch die Gesamtanzahl von Positionen ($c_i$), aufsummiert über alle Positionen ($c_i$).

13. Anordnung nach dem Patentanspruch 11, **dadurch gekennzeichnet, dass** die Berechnungseinrichtung dazu ausgebildet ist, die Wahrscheinlichkeit ($d_k$), dass ein Punkt ($p_k$) dem Benutzer am nächsten ist, zu berechnen als

$$d_k = \frac{1}{T_m} \sum_{i=1}^{T_m} \delta(|c_i - p_k| - \min(r_i))$$

$$\delta(t) = \begin{cases} 0; & t < 0 \\ 1; & t = 0 \\ 0; & t > 0 \end{cases}$$

wobei $T_m$ die Anzahl von Positionen in der Darstellung (C) ist.

**14.** Anordnung nach einem der Ansprüche 8 bis 13, **dadurch gekennzeichnen, dass** das Gebiet (K) die Form entweder einer kreisförmigen Zelle, einer sektorförmigen Zelle, eines Teils einer kreisförmigen Zelle oder eines Teils einer sektorförmigen Zelle hat.

**15.** Computerprogramm in einer Anordnung zum Anordnen von Entfernungen in einer Prioritätsreihenfolge zwischen einem Benutzer, der in einem Gebiet (K) angeordnet ist, und gegebenen Punkten (P), **dadurch gekennzeichnet, dass** es dazu ausgebildet ist, die Schritte gemäß einem der Ansprüche 1 bis 7 auszuführen.

**16.** Medium für Computerprogramm, das **dadurch gekennzeichnet ist, dass** es dazu ausgebildet ist, ein Computerprogramm gemäß Anspruch 15 zu speichern.

**Revendications**

**1.** Procédure pour classer des distances par ordre de priorité entre un utilisateur de communications mobiles situé dans une zone (K) et des points donnés (P), **caractérisée par** les étapes consistant à :

créer une représentation (C) de la zone (K) par un certain nombre de positions discrètes réparties ($c_i$) et calculer les distances ($r_i$) entre les positions discrètes ($c_i$) et les points donnés ($p_k$) ;
déterminer que l'utilisateur est situé dans ladite zone (K) ;
créer une répartition de positions (X) pour l'utilisateur, connectée à la représentation (C) de la zone ; et calculer la probabilité ($d_k$) qu'un point donné ($p_k$) soit le plus près de l'utilisateur comme la somme de la probabilité qu'un utilisateur soit à la position ($c_i$) en même temps que le point donné ($p_k$) est le plus près de la position ($c_i$), additionnée le long de toutes les positions ($c_i$) afin de classer les points donnés ($p_k$) par ordre de priorité selon les probabilités calculées ($d_k$).

**2.** Procédure selon la revendication 1, **caractérisée en ce que** les positions discrètes ($c_i$) sont réparties uniformément dans la zone (K).

**3.** Procédure selon la revendication 1 ou 2, **caractérisée en ce que** la probabilité ($d_k$) qu'un point donné ($p_k$) soit le plus près de l'utilisateur est calculée comme :

$$d_k = \sum_{i=1}^{T_m} x_i * \delta(|c_i - p_k| - \min(r_i))$$

$$\delta(t) \begin{cases} 0; & t < 0 \\ 1; & t = 0 \\ 0; & t > 0 \end{cases}$$

où $x_i$ est la probabilité que l'utilisateur soit à une position dans la représentation (C) et $T_m$ est le nombre de positions dans la représentation (C).

4. Procédure selon la revendication 1 ou 2, **caractérisée en ce que** l'utilisateur a une répartition uniforme de position/ positions (X) pour la totalité de la représentation (C) de la zone (K).

5. Procédure selon la revendication 4, **caractérisée en ce que** la probabilité ($d_k$) qu'un point donné ($p_k$) soit le plus près de l'utilisateur est calculée comme une somme du nombre de positions ($c_i$) qui sont le plus près du point donné ($p_k$) divisée par le nombre total de positions ($c_i$), additionnée le long de toutes les positions ($c_i$).

6. Procédure selon la revendication 4, **caractérisée en ce que** la probabilité ($d_k$) qu'un point donné ($p_k$) soit le plus près de l'utilisateur est calculée comme :

$$d_k = \frac{1}{Tm} \sum_{i=1}^{T_m} \delta(|c_i - p_k| - \min(r_i))$$

$$\delta(t) \begin{cases} 0; & t < 0 \\ 1; & t = 0 \\ 0; & t > 0 \end{cases}$$

où $T_m$ est le nombre de positions dans la représentation (C).

7. Procédure selon l'une quelconque des revendications précédentes, **caractérisée en ce que** la zone (K) a la forme d'une cellule circulaire, d'une cellule en forme de secteur, d'une partie de cellule circulaire, ou d'une partie de cellule en forme de secteur.

8. Disposition pour classer des distances par ordre de priorité, entre un utilisateur de communications mobiles situé dans une zone (K) et des points donnés (P), **caractérisée :**

   **par** des moyens pour déterminer que l'utilisateur est situé dans ladite zone (K) ; par une base de données disposée pour stocker une représentation (C) de la zone (K), en ce que la base de données est disposée pour représenter la zone (K) avec un certain nombre de positions discrètes réparties ($c_i$), en ce qu'un dispositif de calcul est disposé pour calculer les distances ($r_i$) entre les positions discrètes ($c_i$) et les points donnés ($p_k$), et en ce que le dispositif de calcul est disposé pour calculer la probabilité ($d_k$) qu'un point donné ($p_k$) soit le plus près de l'utilisateur comme une somme de la probabilité qu'un utilisateur soit à une position ($c_i$) en même temps que le point donné ($p_k$) est le plus près de la position ($c_i$), additionnée le long de toutes les positions ($c_i$) pour classer les points données ($p_k$) par ordre de priorité selon les probabilités calculées ($d_k$).

9. Disposition selon la revendication 8, **caractérisée en ce que** les positions discrètes ($c_i$) sont réparties uniformément dans la zone (K).

10. Disposition selon la revendication 8 ou 9, **caractérisée en ce que** le dispositif de calcul est disposé pour calculer la probabilité ($d_k$) qu'un point donné ($p_k$) soit le plus près de l'utilisateur comme :

$$d_k = \sum_{i=1}^{T_m} x_i * \delta(c_i - p_k - \min(r_i))$$

$$\delta(t) \begin{cases} 0; & t < 0 \\ 1; & t = 0 \\ 0; & t > 0 \end{cases}$$

où $x_i$ est la probabilité que l'utilisateur soit à une position dans la représentation (C) et
$T_m$ est le nombre de positions dans la représentation (C).

**11.** Disposition selon la revendication 8 ou 9, **caractérisée en ce que** la répartition des positions (X) pour l'utilisateur est uniforme pour la totalité de la représentation (C) de la zone (K).

**12.** Disposition selon la revendication 11, **caractérisée en ce que** le dispositif de calcul est disposé pour calculer la probabilité ($d_k$) qu'un point donné ($p_k$) soit le plus près de l'utilisateur comme la somme du nombre de positions ($c_i$) qui sont le plus près du point donné ($p_k$) divisée par le nombre total de positions ($c_i$), additionnée le long de toutes les positions ($c_i$).

**13.** Disposition selon la revendication 11, **caractérisée en ce que** le dispositif de calcul est disposé pour calculer la probabilité ($d_k$) qu'un point donné ($p_k$) soit le plus près de l'utilisateur comme :

$$d_k = \frac{1}{Tm} \sum_{i=1}^{T_m} \delta(c_i - p_k - \min(r_i))$$

$$\delta(t) \begin{cases} 0; & t < 0 \\ 1; & t = 0 \\ 0; & t > 0 \end{cases}$$

où $T_m$ est le nombre de positions dans la représentation (C).

**14.** Disposition selon l'une quelconque des revendications 8 à 13, **caractérisée en ce que** la zone (K) a la forme d'une cellule circulaire, d'une cellule en forme de secteur, d'une partie de cellule circulaire, ou d'une partie de cellule en forme de secteur.

**15.** Programme d'ordinateur dans une disposition pour classer des distances par ordre de priorité, entre un utilisateur situé dans une zone (K) et les points donnés (P), **caractérisé en ce qu'**il est disposé pour exécuter les étapes selon l'une quelconque des revendications 1 à 7.

**16.** Support pour le programme d'ordinateur **caractérisé en ce qu'**il est disposé pour stocker un programme d'ordinateur selon la revendication 15.

FIG 1A

FIG 1B

FIG 2A

FIG 2B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0143482 A
- WO 0019743 A
- WO 0126393 A
- US 5561704 A
- EP 1133119 A
- WO 9857506 A